# EUROPÄISCHE PATENTANMELDUNG

(11) **EP 1 553 038 A1**
(43) Veröffentlichungstag der Anmeldung: **13.07.2005**
(21) Anmeldenummer: 04106854.5
(22) Anmeldetag: 22.12.2004
(51) Int. Cl.: B66B 1/20, B66B 1/00

(54) **Verfahren zur energiesparenden Steuerung einer Aufzugsgruppe und Aufzugsanlage**

(30) Priorität: 06.01.2004 EP 04405007
(71) Anmelder: INVENTIO AG, CH-6052 Hergiswil (CH)
(72) Erfinder: Kostka, Miroslav, 6275 Ballwil (CH)
(74) Vertreter: Gaussmann, Andreas, Dr.

(57) **Zusammenfassung**

Ein Verfahren zur Steuerung einer Aufzugsanlage mit mehreren Aufzügen, bei dem Zielrufeingaben (NZR) von Passagieren über Zielrufeingabegeräte eingegeben werden und bei dem wenigstens ein eine Verkehrsintensität (MVI) kennzeichnendes Verkehrskriterium der Aufzuganlage von einer Aufzugssteuerung (16) gemessen wird, wobei die Aufzugssteuerung (16) den Zielrufeingaben (NZR) kostenoptimierend Aufzüge zuteilt. Um eine Energieeinsparung bei Aufzugsanlagen mit Zielrufsteuerung zu erhalten, ohne die Transportkapazität der Aufzugsanlage zu beeinträchtigen, wird vorgeschlagen, dass die Aufzugssteuerung (16) den Zielrufeingaben (NZR) zusätzlich energieoptimierend Aufzüge in Abhängigkeit von dem Verkehrskriterium (MVI) zuteilt.

## Beschreibung

Die vorliegende Erfindung betrifft ein Verfahren zur Steuerung einer Aufzugsanlage mit mehreren Aufzügen. Die Passagiere geben ihre Fahrtwünsche in Form von Zielrufeingaben über Zielrufeingabegeräte ein. Eine Aufzugssteuerung misst wenigstens ein eine Verkehrsintensität kennzeichnendes Verkehrskriterium der Aufzuganlage, wobei die Aufzugssteuerung den Zielrufeingaben von Passagieren die Aufzüge energieoptimierend zuteilt. Weiter betrifft die Erfindung eine Aufzugsanlage zur Durchführung des oben genannten Verfahrens.

Moderne Aufzugsanlagen arbeiten zielrufgesteuert. Über Zielrufeingabegeräte gibt ein Passagier sein Fahrziel ein, sodass eine Aufzugssteuerung einen Aufzug aus mehreren Aufzügen für entsprechende Zielrufeingaben kostenoptimierend auswählen kann und diesem Passagier zuteilt. Die Kostenoptimierung wird dabei von den Optimierungskriterien Wartezeit, Fahrtzeit zum Zielort oder höchste Transportleistung beeinflusst.

Häufig wird bei modernen Aufzugsanlagen der niedrige Energieverbrauch angepriesen, wobei jedoch die Einsparungen im Bereich der Antriebstechnik oder Mechanik der Aufzugsanlagen erzielt werden und nicht durch die Art der Aufzugssteuerung oder die Art der Zuteilung der Passagiere. Dies ist teilweise damit begründet, dass die Anforderungen an Aufzugsanlagen einerseits eine maximale Transportleistung zur Verfügung zu stellen und andererseits energiesparend zu arbeiten, teilweise widersprüchlich zu einander sind. Dabei ist unter hoher Transportleistung in erster Linie zu verstehen, dass der Betreiber der Aufzugsanlage eine geforderte Gebäudefüllung in bestimmten Zeiten und die Einhaltung der für die Aufzugsanlage vorgegebenen durchschnittlichen Wartezeiten erwartet.

In der EP 0 246 395 A1 ist eine Gruppensteuerung für Aufzüge beschrieben. Gemäß dieser Patentschrift werden Aufzüge der Aufzugsanlage den von Passagieren eingegebenen Zielrufen kostenoptimierend zugeteilt, sodass sich minimale Wartezeiten ergeben und die Transportleistung gesteigert wird. Dabei wird eine aufwendige Steuerungsschaltung verwendet, die diese oben beschriebene Kostenoptimierung durchführt.

Vor diesem Hintergrund ergibt sich die **Aufgabe**, ein Verfahren zur Steuerung einer Aufzugsanlage anzugeben, bei dem die Möglichkeiten zum Energiesparen durch geeignete Maßnahmen ausgenutzt werden, ohne andere Anforderungen bezüglich der geforderten Transportleistung und der einzuhaltenden Wartezeiten zu beeinträchtigen.

Diese Aufgabe wird bei einem gattungsgemäßen Verfahren zur Steuerung einer Aufzuganlage dadurch **gelöst**, dass den Zielrufeingaben Aufzüge von der Aufzugssteuerung in Abhängigkeit von dem Verkehrskriterium energieoptimierend zugeteilt werden.

Dazu misst die Aufzugssteuerung ständig die Verkehrsintensität in Form von wenigstens einem Verkehrskriterium, wobei die Aufzugssteuerung in Abhängigkeit von der Verkehrsintensität von der kostenoptimierenden Zielrufzuteilung auf die energiesparende Zuteilung umgeschaltet wird. Die energiesparende Zuteilung wird im Folgenden auch als Energiesparmodus bezeichnet.

Die Erfindung basiert auf dem Gedanken, dass Aufzugsanlagen die meiste Zeit nicht an ihrer Transportkapazitätsgrenze betrieben werden. Aufgrund der für die vorgegebene Transportkapazität erforderlichen Algorithmen zur Kostenoptimierung werden die meisten Aufzugsanlagen jedoch fortwährend und andauernd kostenoptimierend betrieben, wobei die Kostenoptimierung weitestgehend bei der Zuteilung von neu eingegebenen Zielrufen angewendet wird.

Die vorgeschlagene Lösung behält die geforderte Transportkapazität und die durchschnittlichen Wartezeiten für die Zielrufzuteilungen bei, nutzt aber die zeitlichen Freiräume, die außerhalb von Verkehrsspitzenzeiten vorhanden sind. Innerhalb dieser zeitlichen Freiräume wird das ständige Bemühen der Aufzugssteuerung, minimale Wartezeiten und eine maximale Transportkapazität zu erreichen, deaktiviert. Dabei wird durch die erfindungsgemäße energiesparende Zuteilung der Zielrufeingaben nur eine mäßige Verlängerung der Wartezeiten in Kauf genommen, die von den Passagieren meist nicht wahrnehmbar sind.

Die energiesparenden Maßnahmen bei der Zuteilung von Zielrufen sind insbesondere bei Aufzügen wirksam, die große Entfernungen ohne Ausstiegsstockwerke überwinden. Bei Großgebäuden ist immer wieder zu beobachten, dass nahezu leere Aufzugskabinen über die evtl. 100 Meter langen so genannten Blindzonen fahren. Dabei beträgt die Wartezeit auf dem Stockwerk für den evtl. nur einzigen Passagier im Extremfall nur einige Sekunden und das in einem Großgebäude, wo die Akzeptanz für entsprechend längere Wartezeiten durchaus vorhanden ist. An dieser Stelle setzt die Erfindung ein.

Vorteilhafte Ausgestaltungen der Erfindung sind den Unteransprüchen zu entnehmen.

In einer vorteilhaften Ausgestaltung der Erfindung wird bei Unterschreiten wenigstens eines Verkehrskriteriums die energieoptimierende Zuteilung aktiviert. Dabei wird das Unterschreiten eines Verkehrskriteriums für eine vorgebbare Zeitspanne überwacht. Bei Überschreiten einer festlegbaren Anzahl von Verkehrskriterien wird die energieoptimierende Zuteilung deaktiviert. Auch hier sollte vorteilhafterweise ein Überschreiten erst nach einer vorgegebenen Zeitspanne als Überschreiten eines Verkehrskriteriums gewertet werden. Die Zeitspanne, in der die Verkehrskriterien überwacht werden, kann dabei aufzugsspezifisch ausgebildet sein. Je nach Anwendungsfall kann auch bei einem Überschreiten eines Verkehrskriteriums die energieoptimierende Zuteilung deaktiviert und bei Unterschreiten aktiviert werden.

Zu der Verkehrsintensität gehört in einem Ausführungsbeispiel der vorliegenden Erfindung als ein erstes Verkehrskriterium die Ermittlung einer mittleren Wartezeit der Passagiere bis zur Beförderung, wobei diese mittlere Wartezeit der Passagiere bis zur Beförderung mit einer vorgegebenen Wartezeit für die energiesparende Zuteilung verglichen wird. Dabei wird die Aufzugsanlage von der Aufzugssteuerung bei Unterschreiten der vorgegebenen Wartezeit für die energiesparende Zuteilung in den durch die energiesparende Zuteilung gekennzeichneten Energiesparmodus geschaltet.

Ein zweites Verkehrskriterium zur Aktivierung des Energiesparmodus wird aus einem Vergleich einer Anzahl der auf allen Stockwerken Wartenden, aber bisher noch nicht beförderten Passagieren mit einer Anzahl von wartenden Passagieren für den Energiesparmodus gebildet. Dabei wird auch hier die Aufzugsanlage von der Aufzugssteuerung bei Unterschreiten der vorgegebenen Anzahl der wartenden Passagiere in den Energiesparmodus geschaltet.

In einer weiteren vorteilhaften Ausgestaltung der Erfindung wird ein drittes Verkehrskriterium zur Aktivierung des Energiesparmodus mittels eines Vergleichs einer mittleren Anzahl von Passagieren pro Fahrt mit einer Anzahl von Passagieren pro Fahrt für den Energiesparmodus gebildet. Die Aufzugsanlage wird von der Aufzugssteuerung bei Unterschreiten der vorgegebenen Anzahl von Passagieren pro Fahrt in den Energiesparmodus geschaltet. Dabei können beispielsweise 30s Stillstand eines Aufzugs bei der Erfassung der Verkehrsintensität als Leerfahrt erfasst werden.

Bei einem bevorzugten Ausführungsbeispiel der Erfindung erfolgt eine Deaktivierung der energiesparenden Zuteilung in Abhängigkeit von einer vorgebbaren Zeit. Dadurch wird ein schnelles Hin- und Herschalten zwischen den unterschiedlichen Zuteilungsarten vermieden, was für die Passagiere letztendlich die Wartezeit erhöhen würde und damit kontraproduktiv wäre. Die vorgegebene Zeit kann dabei eine minimale Laufzeit für die energiesparende Zuteilung sein. Außerdem ist es möglich, den Energiesparmodus täglich zu gleich bleibenden Uhrzeiten zu aktivieren und deaktivieren, wobei auch diese feste Aktivierung und Deaktivierung bedarfsgerecht verändert werden kann.

In einer weiteren vorteilhaften Ausgestaltung der Erfindung werden die oben genannten Verkehrskriterien innerhalb eines einstellbaren Zeitintervalls oder einer einstellbaren Kurzhistorie gemessen. Dadurch ist es möglich, die Empfindlichkeit bei der Umschaltung vom kostenoptimierenden Modus zum energiesparenden Modus zu beeinflussen. Ein Beispiel für ein einstellbares Zeitintervall, in dem die Verkehrskriterien oder insgesamt die Verkehrsintensität gemessen werden, liegt bei 5 Minuten. Dieses einstellbare Zeitintervall kann gebäudeabhängig unterschiedlich ausfallen.

Wenn wenigstens eines oder auch mehrere der oben beispielhaft genannten Verkehrskriterien erfüllt sind, wird bei der Aufzugsanlage, insbesondere die Aufzugssteuerung in die energiesparende Zuteilung umgeschaltet, sodass neu eingegebene Zielrufe den Aufzügen energiesparend zugeteilt werden.

In einer vorteilhaften Ausgestaltung der Erfindung wird eine Deaktivierung des Energiesparmodus erst dann vorgenommen, wenn zwei der erwähnten Verkehrskriterien nicht mehr erfüllt werden und eine einstellbare minimale Laufzeit für die energiesparenden Maßnahmen abgelaufen ist.

Wenn der Energiesparmodus eingeschaltet ist und neue Zielrufe energiesparend zugeteilt werden, kann insbesondere dadurch Energie eingespart werden, dass die Aufzugskabinen ausbalanciert bewegt werden. Somit wird grundsätzlich bei der energiesparenden Zuteilung versucht, die Zielrufe den Aufzügen so zuzuteilen, dass die Aufzüge ausbalanciert bewegt werden. Eine Ausnahme bei dieser Ausbalancierung der Aufzüge bildet eine so genannte Start/Ziel-Koinzidenz eines neu eingegebenen Zielrufes mit einem schon registrierten Zielruf. Unter einer Start/Ziel-Koinzidenz im Sinne der vorliegenden Erfindung wird die gemeinsame Fahrt von wenigstens zwei Passagieren verstanden. Dazu wird in einer weiteren vorteilhaften Ausgestaltung der Erfindung bei einer Neueingabe eines Zielrufs eine Start/Ziel-Koinzidenz der neuen Zielrufeingabe mit anderen schon registrierten Zielrufeingaben geprüft, wobei bei Vorhandensein einer Start/Ziel-Koinzidenz die neue Zielrufeingabe kostenoptimierend zugeteilt wird, obwohl anhand er gemessenen Verkehrskriterien die energiesparende Zuteilung aktiv ist. Wenn während der Gültigkeit des Energiesparmodus ein neuer Zielruf eingegeben wird und eine Start/Ziel-Koinzidenz vorliegt, spart man ein bis zwei Fahrten des Aufzugs gegenüber einer energiesparenden Zuteilung zu einem Aufzug der evtl. durch zugeteilten Passagier besser ausbalanciert wäre, aber keine Koinzidenz der Zielrufe aufweisen würde. Der Energieverbrauch der beiden zusätzlichen Fahrten kann jedoch durch die bessere Ausbalancierung nicht ausgeglichen werden, sodass in diesem Fall trotz des aktivierten Energiesparmodus die Zuteilung kostenoptimierend durchgeführt wird.

In einer vorteilhaften Ausgestaltung der Erfindung wird vor jedem Fahrtbeginn eines Aufzugs eine Lastmessung vorgenommen, mittels derer und eventuell anhand weiterer Buchungen für die diesem Aufzug zugeteilten Passagiere ein Verlauf einer Aufzugslast über eine bestimmte Fahrtstrecke des Aufzugs ermittelt wird. Dieser Verlauf der Aufzugslast dient dazu, bei der energiesparenden Zuteilung von Aufzügen den Aufzug auszuwählen, bei dem eine Zuteilung eines neuen Zielrufes eine bessere Ausbalancierung gewährleistet.

In einer weiteren vorteilhaften Ausgestaltung der Erfindung wird bei aktiviertem Energiesparmodus und einer Neueingabe eines Zielrufs die Aufzugslast eines Aufzugs für die dem Zielruf entsprechende Fahrtstrecke geprüft und der Zielruf dem Aufzug zugeteilt, bei dem das Zusteigen des Passagiers von diesem Zielruf kein Überschreiten einer vorbestimmten Aufzugslast für diese Fahrtstrecke bewirkt. Dadurch wird es erreicht, dass die Aufzüge bevorzugt zugeteilt werden, bei denen für die von diesem Zielruf betroffene Fahrtstrecke die Aufzugslast unterhalb einer vorbestimmten Grenze liegt.

In einer vorteilhaften Ausgestaltung der Erfindung entspricht die vorbestimmte Aufzugslast der halben zulässigen Aufzugslast abzüglich eines vorbestimmten Passagiergewichts. Dabei können je nach Einsatzort und in Abhängigkeit der Region die Passagiergewichte unterschiedlich ausfallen.

In einer vorteilhaften Ausgestaltung der Erfindung wird bei aktiviertem Energiesparmodus eine theoretische Wartezeit eines jeden Passagiers ermittelt. Weiter wird eine einstellbare, tolerierbare Wartezeit pro Aufzug festgelegt und dient der Aufzugssteuerung als Regelgröße. Dabei ergibt sich die theoretische Wartezeit jedes einzelnen schon zugeteilten Passagiers aus der momentanen Zeit abzüglich der Eingabezeit. Zu dieser theoretischen Wartezeit wird die theoretische Zeit zum Erreichen des Start- oder Einstiegstockwerks unter Berücksichtigung von evtl. geplanten Zwischenstopps hinzu addiert.

Bei der energiesparenden Zuteilung eines Aufzuges wird diese tolerierbare Wartezeit mit einer theoretischen Wartezeit von allen diesem Aufzug zugeteilten Zielrufen verglichen, wobei ein Zielruf dann einem Aufzug zugeteilt werden könnte , wenn die oben genannte theoretische Wartezeit von allen diesem Aufzug zugeteilten Zielrufen kleiner als die tolerierbare Wartezeit ist. Dadurch wird garantiert, dass die Wartezeit trotz der energiesparenden Zuteilung nicht über einer festgelegten tolerierbaren Wartezeit liegt. Diese tolerierbare Wartezeit sollte dabei grundsätzlich nicht über der vom Betreiber geforderten garantierten Wartezeit liegen. Dabei wird aber verhindert, dass bei der kostenoptimierenden Zuteilung die Wartezeiten immer weiter verkürzt werden, ohne auf die aufgewendete Energie zu achten.

In einer weiteren vorteilhaften Ausgestaltung der Erfindung wird als weiteres Kriterium bei der energiesparenden Zuteilung von Zielrufen der Vergleich einer einstellbaren tolerierbaren Fahrzeit zum Ziel mit der theoretischen Fahrzeit zum Ziel eines jeden Passagiers verwendet. Die Fahrtzeit zum Ziel ergibt sich aus der Wartezeit und der Fahrtzeit einschließlich der geplanten Zwischenstopps des Aufzugs.

Die Zuteilung eines neuen Zielrufs könnte dann vorgenommen werden, wenn die Fahrtzeit zum Ziel von allen diesem Aufzug zugeteilten Passagieren kleiner ist als die tolerierbare Fahrtzeit zum Ziel. Die tolerierbare Fahrtzeit zum Ziel ist dabei wiederum eine einstellbare Größe, die pro Aufzug festgelegt wird und die von der Aufzugsteuerung als eine Regelgröße verwendet wird.

Als vorteilhaft wirkt es sich aus, wenn während des aktivierten Energiesparmodus bei der Zuteilung von neuen Zielrufen die sonst übliche Begrenzung der Anzahl von Zwischenstopps, die bei der kostenoptimierenden Zuteilung üblich ist, ausgeschaltet wird. Indirekt wird diese Anzahl der Zwischenstopps durch die Überwachung der tolerierbaren Wartezeit und der tolerierbaren Fahrtzeit zum Ziel beeinflusst. Normalerweise dient die Begrenzung der Anzahl von Zwischenstopps der Verkürzung der Rundfahrtzeiten bei der kostenoptimierenden Zuteilung von Zielrufen.

In einer vorteilhaften Ausgestaltung der Erfindung wird bei aktiviertem Energiesparmodus und Neueingabe eines Zielrufs diesem Zielruf der Aufzug zugeteilt, der die längste gemeinsame Fahrtstrecke mit geeigneter Aufzugslast aufweist. Die geeignete Aufzugslast wurde oben stehend beschrieben. Um dazu eine Aussage treffen zu können, müssen die gemeinsamen Fahrtstrecken von dem zuzuteilenden Zielruf und dem momentan überprüften Aufzug verglichen werden. Diese vorteilhafte Zuteilung des Aufzugs, der die längste gemeinsame Fahrtstrecke mit geeigneter Aufzugslast aufweist, reduziert u.a. die Anzahl von Zwischenstopps.

Bei einer vorteilhaften Ausgestaltung der Erfindung wird während des Energiesparmodus und der Zuteilung von neuen Zielrufen bei einer Eignung von mehreren Aufzügen für diesen Zielruf mit derselben gemeinsamen Fahrtstrecke der kostengünstigste Aufzug zugeteilt.

Vorteilhaft ist bei der erfindungsgemäßen Ausgestaltung, dass trotz aktiviertem Energiesparmodus bei der Zuteilung von neu eingegebenen Zielrufen selbst dann ein Aufzug zugeteilt werden könnte, wenn die Kriterien zur energiesparenden Zuteilung von Aufzügen nicht erfüllt werden, wobei einem derartigen Zielruf ein Aufzug nach einer kostenoptimierenden Zuteilung ohne Berücksichtigung der energiesparenden Zuteilung zugeteilt wird.

Die oben genannte Aufgabe wird auch durch eine Aufzugsanlage mit mehreren Aufzügen **gelöst**, die in einem Gebäude zur Personenbeförderung angeordnet sind, bei der Zielrufe von Passagieren über Zielrufeingabegeräte eingebbar sind und bei der wenigstens ein Verkehrskriterium innerhalb einer vorgebbaren Zeitspanne von einer Aufzugssteuerung messbar ist, wobei einem Passagier ein Aufzug von der Aufzugssteuerung kostenoptimierend zuteilbar und über eine Informationseinheit anzeigbar ist und die Aufzüge in Abhängigkeit von dem wenigstens einen Verkehrskriterium den Passagieren zusätzlich energieoptimierend zuteilbar sind.

In einer vorteilhaften Ausgestaltung der Erfindung nimmt die Aufzugssteuerung eine Messung der Verkehrsintensität innerhalb eines einstellbaren Zeitintervalls vor, wobei die Aufzugsanlage von der Aufzugssteuerung in Abhängigkeit von der gemessenen Verkehrsintensität in den Energiesparmodus schaltbar ist.

Insgesamt wird durch die erfindungsgemäße Ausgestaltung sowohl des Verfahrens als auch der Aufzugsanlage ein Sammeln der Passagiere bei einem Aufzug bis zu einem Erreichen einer ausbalancierten Last begünstigt, wobei der besser ausbalancierte Aufzug weniger Energie verbraucht als ein unbalancierter Aufzug. Für die erfindungsgemäße Ausgestaltung steigt die Wahrscheinlichkeit, dass im besser ausbalancierten Aufzug gewisse Fahrtstrecken für 2 oder mehr Passagiere gemeinsam abgefahren werden.

Durch die Zuteilung von mehreren Fahrten zu einem Aufzug werden automatisch die Fahrten anderer Aufzüge vermieden, wodurch mehrere Leerfahrten (Abholfahrten) vermieden werden und weitere Energieersparnisse erzielt werden können.

Nachfolgend wird die Erfindung anhand von Ausführungsbeispielen näher erläutert, was in den Zeichnungen schematisch dargestellt ist.

Fig. 1 zeigt eine Aufzugsanlage gemäß der vorliegenden Erfindung;

Fig. 2 zeigt ein Ablaufdiagramm zur Zuteilung eines neuen Zielrufs gemäß der vorliegenden Erfindung;

Fig. 3 zeigt ein Ablaufdiagramm zur Aktivierung eines energiesparenden Modus;

Fig. 4 zeigt eine energiesparende Zuteilung von Zielrufen gemäß der vorliegenden Erfindung.

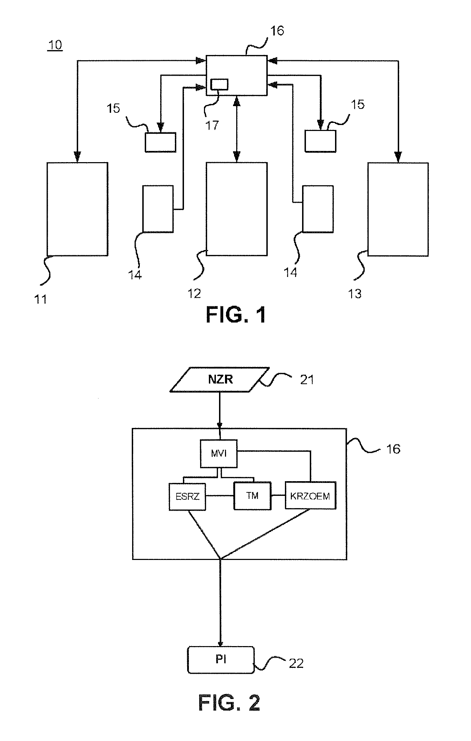

Eine erfindungsgemäße Aufzugsanlage 10 wird in Figur 1 gezeigt. Die erfindungsgemäße Aufzugsanlage 10 umfasst drei Aufzüge 11, 12 und 13. Die drei Aufzüge 11, 12 und 13 werden von einer Aufzugssteuerung 16 gesteuert. Zur Vereinfachung der Darstellung wird auf die Darstellung von Antriebseinheiten und Aufzugsschächten verzichtet. Über Zielrufeingabegeräte 14 wird von den Passagieren jeweils ein Zielruf eingegeben und zu der Aufzugssteuerung 16 übertragen. Die Aufzugssteuerung 16 ermittelt den für diesen Zielruf günstigsten Aufzug 11, 12, 13 und teilt dem Passagier den ermittelten Aufzug 11, 12 oder 13 über die Informationseinheit 15 mit. Außerdem ist in der Aufzugssteuerung 16 eine Lastmesseinheit 17 angeordnet, mittels der eine Lastmessung der einzelnen Aufzüge vornehmbar ist, wobei die lastaufnehmenden Teile der Lastmesseinheit 17 an den Aufzügen 11, 12, 13 angeordnet sind (nicht dargestellt). Dabei wird die Art der Zuteilung der Aufzüge in der Aufzugssteuerung 16 bestimmt.

Figur 2 zeigt eine Ablaufsteuerung zur Zuteilung eines neuen Zielrufs. Der neue Zielruf wird eingegeben und von der Aufzugsteuerung 16 verarbeitet. In Schritt 21 wird ein neuer Zielruf vom Passagier über ein Zielrufeingabegerät 14 eingegeben. Die Aufzugsteuerung 16 nimmt ständig eine Messung der Verkehrsintensität vor, wobei die Verkehrsintensität ein oder mehrere festlegbare Verkehrskriterien 32, 33, 34 umfasst. Bei Unterschreiten eines oder mehrerer der vorgegebenen Verkehrskriterien wird die Aufzugsanlage 10 von der Aufzugsteuerung 16 in den Energiesparmodus ESRZ geschaltet. Im Energiesparmodus werden neue Zielrufe von der Aufzugssteuerung 16 energiesparend zugeteilt ESRZ. In der Aufzugsanlage 16 ist ein Zeitglied TM angeordnet, das bei einer Deaktivierung des Energiesparmodus ESRZ verwendet wird. Nachdem der Energiesparmodus ESZR aktiviert wurde, können ein oder mehrere Verkehrskriterien nicht mehr die vorgegebenen Werte erfüllen, so dass die Bedingungen zur Aktivierung des Energiesparmodus ESZR nicht mehr gegeben sind. Um jedoch ein häufiges Hin- und Herschalten zu vermeiden, wird das Zeitglied TM verwendet. Bei Aktivierung des Energiesparmodus ESRZ wird das Zeitglied TM gestartet. Es enthält eine vorgebbare Zeitspanne, beispielsweise 5 Minuten, deren Ablauf überprüft wird. Der Energiesparmodus ESRZ wird erst dann deaktiviert, wenn ein oder mehrere Verkehrskriterien 32, 33, 34 nicht mehr erfüllt sind und die vorgegebene Zeitspanne des Zeitgliedes TM abgelaufen ist. Nachdem diese Zeitspanne abgelaufen ist, werden neue Zielrufe wieder kostenoptimierend (KRZOEM) zugeteilt, ohne energiesparende Maßnahmen. Die Aufzugssteuerung 16 aktiviert somit in Abhängigkeit der gemessenen Verkehrsintensität MVI den Zuteilungsmodus (ESZR oder KRZOEM) für neue Zielrufe. Der zu wählende Aufzug, der für den eingegebenen Zielruf von der Aufzugssteuerung 16 ermittelt wird, wird dem Passagier in Schritt 22 unabhängig von der Art der Zuteilung über die Informationseinheit 15 angezeigt.

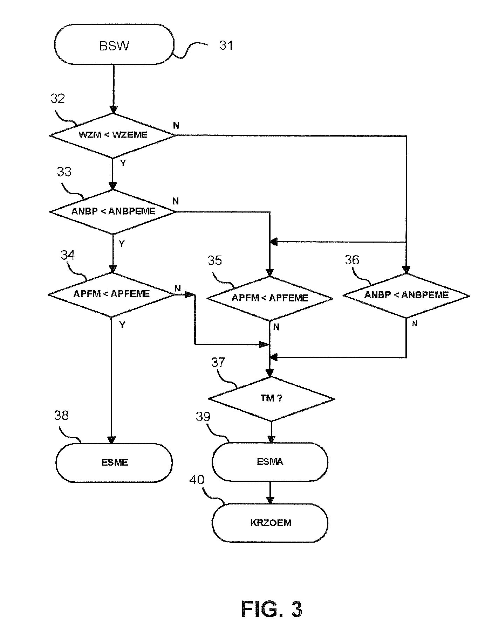

In Figur 3 ist detailliert dargestellt, wie die gemessene Verkehrsintensität mit beispielhaften Verkehrskriterien 32, 33, 34 zur Aktivierung des energiesparenden oder kostenoptimierenden Zuteilungsmodus benutzt wird. Im Schritt 31 werden statistische Werte aus den übermittelten Zielrufen, den Lastmessungen und anderen relevanten Parametern der Aufzugssteuerung, beispielsweise momentane Uhrzeit, Zeitspanne der Überwachung, Aufzugslast und Passagiergewicht, berechnet oder ermittelt. Diese statistischen Werte umfassen auch die mittlere Wartezeit WZM, die Anzahl nicht bedienter Passagiere ANBP und die Anzahl der Passagiere pro Fahrt APFM.

Im Schritt 32 wird die mittlere Wartezeit WZM mit einer vorgegebenen Wartezeit für den Energiesparmodus WZMEME verglichen. Ist die mittlere Wartezeit WZM geringer als die mittlere Wartezeit für den Energiesparmodus WZMEME, wird mit Schritt 33 weitergearbeitet, bei dem die Anzahl der nicht bedienten Passagiere ANBP mit einer festgelegten Anzahl von nicht bedienten Passieren für den Energiesparmodus ANBPEME verglichen wird. Fällt dieser Vergleich ebenfalls positiv aus, folgt als nächstes Schritt 34, bei dem die Anzahl von Passieren pro Fahrt APFM mit einer Anzahl von Passieren pro Fahrt für den Energiesparmodus APFEME verglichen wird. Wenn auch dieser Vergleich positiv ausfällt, wird die Aufzugsanlage 10 von der Aufzugsteuerung 16 in Schritt 38 in den energiesparenden Modus ESME versetzt, bei dem neue Zielrufe energiesparend zugeteilt werden und das Zeitglied TM in der Aufzugssteuerung16 aktiviert wird.

Wenn in Schritt 32 beim Vergleich der mittleren Wartezeit WZM mit der mittleren Wartezeit für den Energiesparmodus WZMEME ein negatives Ergebnis berechnet wird, wird mit den Schritten 35 und 36 weiter verfahren. In Schritt 35 wird die Anzahl der Passagiere pro Fahrt APFM mit der Anzahl der Passiere pro Fahrt für den Energiesparmodus APFMEME verglichen. In Schritt 36 wird die Anzahl der nicht bedienten Passagiere ANBP mit der Anzahl der nicht bedienten Passagiere für den Energiesparmodus ANBPEME verglichen. Wenn auch diese Verkehrskriterien der Schritte 35 und 36 nicht erfüllt sind, wird der Ablauf des zuvor gestarteten Zeitgliedes TM in Schritt 37 überprüft. Wenn die Zeitspanne des Zeitgliedes TM abgelaufen ist, wird in Schritt 39 der Energiesparmodus deaktiviert ESMA, so dass die Zuteilung von neuen Zielrufen kostenoptimierend KRZOEM ohne die Energiesparmaßnahmen erfolgt. Auch wenn ein Vergleich in Schritt 33 negativ ausfällt, wird mit Schritt 35 weiter verfahren, bei dem die Anzahl APFM der Personen pro Fahrt mit der Anzahl der Personen pro Fahrt für den Energiesparmodus APFMEME verglichen wird. Wenn auch dieser Vergleich in Schritt 35 negativ ausfällt, wird ebenfalls das Zeitglied TM kontrolliert oder ggf. der Energiesparmodus der Aufzugsanlage deaktiviert ESMA und neue Zielrufe kostenoptimierend zugeteilt KRZOEME.

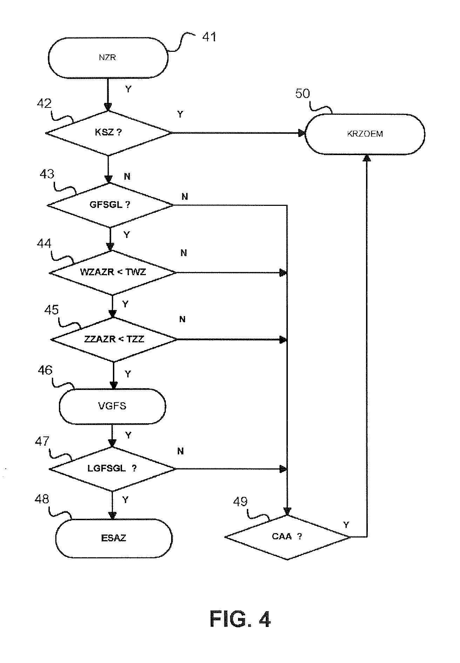

In Figur 4 ist ein Ablaufdiagramm dargestellt, in dem dargestellt ist, wie bei aktiviertem Energiesparmodus ein neu eingegebener Zielruf energiesparend zugeteilt wird.

In Schritt 41 wird ein neuer Zielruf eingegeben. Als Erstes wird in Schritt 42 eine Start/Ziel-Koinzidenz zwischen dem neu eingegebenen Zielruf und bereits registrierten Zielrufen abgeprüft. Fällt diese Überprüfung positiv aus, wird der neu eingegebene Zielruf nicht energiesparend zugeteilt, sondern in Schritt 50 kostenoptimierend. Wie oben erläutert, werden durch Ausnutzung einer Koinzidenz ein bis zwei Fahrten von Aufzügen eingespart, sodass dadurch eine sehr viel Energie eingespart werden kann. Diese eingesparte Energie kann durch eine bessere Ausbalancierung der Aufzüge nicht erreicht werden, sodass bei einer Koinzidenz trotz des aktivierten Energiesparmodus die Zuteilung des koinzidenten Zielrufes kostenoptimierend erfolgt.

Liegt keine Koinzidenz vor, wird in Schritt 43 eine gemeinsame Fahrtstrecke mit geeigneter Last GFSGL abgeprüft. Dazu wird von der Aufzugsteuerung 16 vor jedem Fahrtantritt eines Aufzugs die Last mittels der Lastmesseinheit 17 gemessen. Somit kann bei der Zuteilung eines neuen Zielrufs zu einem Aufzug die gemeinsame Fahrstrecke mit geeigneter Last GFSGL berücksichtigt werden, bei der die Aufzugslast berücksichtigt wird. Die bevorzugte Aufzugslast zur Bereitstellung einer ausbalancierte Aufzugsanlage liegt bei der halben maximal zulässigen Aufzugslast Q/2. Liegt bei der Überprüfung in Schritt 43 für eine gemeinsame Fahrtstrecke des neu eingegebenen Zielrufs für diese Fahrtstrecke eine Last eines überprüften Aufzugs vor, die geringer als die halbe zulässige Aufzugslast (Q/2) ist abzüglich eines vorbestimmten Passagiergewichts von beispielsweise 80 kg, wird mit Schritt 44 weiter verfahren. Ist keine gemeinsame Fahrtstrecke mit geeigneter Last GFSGL bei dieser Überprüfung in Schritt 43 aufgefunden worden, wird ein nächster Aufzug in Schritt 49 auf eine gemeinsame Fahrtstrecke mit geeigneter Last GFSGL überprüft. Sollte bei dieser Überprüfung in Schritt 49 kein anderer Aufzug gefunden werden, wird diesem Zielruf in Schritt 50 ein Aufzug kostenoptimierend zugeteilt. Liegt jedoch eine gemeinsame Fahrtstrecke mit geeigneter Last GFSGL bei dem Vergleich in Schritt 43 vor, wird als Nächstes in Schritt 44 die Wartezeit aller diesem Aufzug zugeteilten Zielrufe WZAZR mit der tolerierbaren Wartezeit TWZ verglichen. Bei einem positiven Vergleich wird mit Schritt 45 weiter verfahren. Bei einem negativen Vergleichsergebnis wird in Schritt 49 entsprechend ein anderer Aufzug überprüft, ggf. wird diesem neuen Zielruf in Schritt 50 ein Aufzug kostenoptimierend zugeteilt.

Bei einem positiven Vergleichsergebnis in Schritt 44 wird mit dem Schritt 45 weiter verfahren, bei dem die Fahrtzeit zum Ziel aller zugeteilten Rufe ZZAZR mit einer tolerierbaren Fahrtzeit zum Ziel TZZ verglichen wird. Hier wird ebenfalls bei einem negativen Vergleich in Schritt 49 ein nächster Aufzug überprüft und ggf. bei Nichtauffinden eines geeigneten Aufzugs diesem Zielruf in Schritt 50 ein Aufzug kostenoptimierend zugeteilt. Sollte jedoch dieser Vergleich positiv ausfallen, wird mit Schritt 46 weiter verfahren. In Schritt 46 wird der Vergleich der gemeinsamen Fahrtstrecke VGFS vorgenommen. In Schritt 47, der darauf folgt, wird der Aufzug ausgewählt, der die längste gemeinsame Fahrtstrecke mit geeigneter Last LGFSGL aufweist. Sollte dieser Vergleich negativ ausgehen, wird ein weiterer Aufzug in Schritt 49 ausgewählt und ggf. in Schritt 50 ein Aufzug kostenoptimierend zugeteilt. Ist der Vergleich in Schritt 47 positiv, wird der neue Zielruf dem Aufzug zugeteilt, der die längste gemeinsame Fahrtstrecke mit geeigneter Last LGFSGL aufweist. Dieser nun ausgewählte Aufzug ist energiesparend zugeteilt und wird dem Passagier, der den Zielruf eingegeben hat, über die Informationseinheit 15 mitgeteilt.

Somit wird bei aktivierter energiesparender Zuteilung zuerst auf Koinzidenz geprüft und danach auf eine entsprechende bessere Ausbalancierung des Aufzugs. Aus den Aufzügen, welche obgenannte Kriterium erfüllen, werden diejenigen ausgewählt, bei denen die Zuteilung des neuen zusteigenden Passagiers bei keinem der bisher schon zugeteilten Zielrufen eine längere Wartezeit WZ als die tolerierbare Wartezeit TWZ und keine längere Fahrtzeit zum Ziel FZ als die tolerierbare Fahrtzeit zum Ziel TZZ verursachen würde. Unter den Aufzügen, welche beide Bedingungen erfüllen, wird derjenige Aufzug ausgewählt, der die längste schon im Voraus geplante Fahrtstrecke gemeinsam LGFSGL mit dem neuen Zielruf aufweist. Sollten mehrere Aufzüge, dieselben gemeinsamen Strecken mit dem neuen Zielruf aufweisen, wird der kostenmäßig günstigste Aufzug ausgewählt und diesem der neue Zielruf zugeteilt. Sollte nach obgenannten Prüfungen kein Aufzug gefunden werden, der alle Bedingungen erfüllt, wird der neue Zielruf nach den kostenoptimierenden Kriterien ohne Energiesparmassnahmen zugeteilt.

Somit wird ein Verfahren zur Steuerung einer Aufzugsanlage angegeben, bei dem in Zeiträumen, in denen die Auslastung der Aufzugsanlage nicht besonders hoch ist, energiesparende Maßnahmen eingeleitet werden, ohne dass die Transportkapazität der Aufzugsanlage beeinträchtigt wird, da dass Verfahren im Fall eines Ansteigens der Verkehrsintensität dieses Ansteigen registriert und eine kostenoptimierende Zuteilung von Aufzügen aktivieren kann, die der Maximierung der Transportkapazität und der Einhaltung der garantierten Wartezeiten dient.

## Patentansprüche

1. Verfahren zur Steuerung einer Aufzugsanlage (10) mit mehreren Aufzügen (11, 12, 13), bei dem Zielrufeingaben von Passagieren über Zielrufeingabegeräte (14) eingegeben werden und bei dem wenigstens ein eine Verkehrsintensität kennzeichnendes Verkehrskriterium (32, 33, 34) der Aufzuganlage (10) von einer Aufzugssteuerung (16) gemessen wird, wobei die Aufzugssteuerung (16) den Zielrufeingaben kostenoptimierend Aufzüge (11, 12, 13) zuteilt, **dadurch gekennzeichnet, dass** die Aufzugssteuerung (16) den Zielrufeingaben zusätzlich energieoptimierend Aufzüge (11, 12, 13) in Abhängigkeit von dem Verkehrskriterium (32, 33, 34) zuteilt.

2. Verfahren nach Anspruch 1, **dadurch gekennzeichnet, dass** bei Unterschreiten wenigstens eines Verkehrskriteriums (32, 33, 34) die energieoptimierende Zuteilung aktiviert wird und bei Überschreiten einer festlegbaren Anzahl von Verkehrskriterien (32, 33, 34) die energieoptimierende Zuteilung deaktiviert wird.

3. Verfahren nach Anspruch 1 oder 2, **dadurch gekennzeichnet, dass** die energieoptimierende Zuteilung aktiviert wird, wenn
- eine mittlere Wartezeit der Passagiere auf dem Stockwerk bis zur Bedienung (WZM) unter einer vorgegebenen Wartezeit für die energieoptimierende Zuteilung (WZEME) liegt und/oder
- eine Anzahl der auf Stockwerken wartenden, aber bisher noch nicht bedienten Passagiere (ANBP) unter einer vorgegebenen Anzahl von wartenden Passagieren für die energieoptimierende Zuteilung (ANBPEME) liegt und/oder
- eine mittlere Anzahl von Passagieren pro Fahrt (APFM) unter einer Anzahl von Passagieren pro Fahrt für die energieoptimierende Zuteilung (APFEME) liegt.

4. Verfahren nach einem der Ansprüche 1 bis 3, **dadurch gekennzeichnet, dass** die energieoptimierende Zuteilung in Abhängigkeit von einer vorgebbaren Zeit (TM) deaktiviert wird.

5. Verfahren nach einem der Ansprüche 1 bis 4, **dadurch gekennzeichnet, dass** bei einer Neueingabe eines Zielrufs (41) eine Start/Ziel-Koinzidenz (42) der neuen Zielrufeingabe mit anderen schon registrierten Zielrufeingaben geprüft wird und bei Vorhandensein einer Start/Ziel-Koinzidenz die neue Zielrufeingabe kostenoptimierend zugeteilt wird.

6. Verfahren nach einem der Ansprüche 1 bis 5, **dadurch gekennzeichnet, dass** vor jedem Fahrtbeginn eines Aufzugs (11, 12, 13) eine Lastmessung vorgenommen wird, mittels der ein Verlauf einer Aufzugslast der diesem Aufzug (11, 12, 13) zugeteilten Passagiere über eine bestimmte Fahrtstrecke des Aufzugs (11, 12, 13) ermittelt wird, und dass bei energieoptimierender Zuteilung einer Zielrufeingabe die Aufzugslast des Aufzugs (11, 12, 13) für die der Zielrufeingabe entsprechende Fahrtstrecke geprüft und die Zielrufeingabe dem Aufzug (11, 12, 13), bei dem das Zusteigen des Passagiers von diesem Zielruf kein Überschreiten einer vorbestimmten Aufzugslast für diese Fahrstrecke (GFSGL) bewirkt, zugeteilt wird, wobei die vorbestimmte Aufzugslast (Q/2-G_{P}) der halben zulässigen Aufzugslast (Q/2) abzüglich eines vorbestimmten Passagiergewichtes (G_{P}) entspricht.

7. Verfahren nach einem der Ansprüche 1 bis 6, **dadurch gekennzeichnet, dass** bei energieoptimierender Zuteilung die theoretische Wartezeit (WZ) eines jeden Passagiers, der der betrachteten Kabine schon zugeteilt ist aus theoretischen Fahrzeit des Aufzugs (11, 12, 13 ) bis zum Erreichen des Einstiegsstockwerks unter Berücksichtigung des neu zuzuteilenden Passagiers und der durch seine Zuteilung eventuell verursachten Verzögerung neu berechnet wird und mit einer einstellbaren, tolerierbaren Wartezeit ( TWZ ) verglichen wird und alle Aufzüge mit allen erwähnten theoretischen Wartezeiten ( WZ ) kleineren als die tolerierbare Wartezeit ( TWZ) ausgewählt werden.

8. Verfahren nach einem der Ansprüche 1 bis 7, **dadurch gekennzeichnet, dass** bei energieoptimierender Zuteilung die theoretische Zeit eines jeden Passagiers zum Ziel (ZZ), die sich aus der Wartezeit (WZ) und der Fahrtzeit ( FZ ) einschließlich der geplanten Zwischenstopps des Aufzugs (11, 12, 13) ergibt, mit einer einstellbaren, tolerierbaren Zeit zum Ziel (TZZ) verglichen wird und bei Neueingabe eines Zielrufs (41) diejenige Aufzüge (11, 12, 13) ausgewählt werden, bei denen eine Fahrtzeit zum Ziel von allen diesem Aufzug (11, 12, 13) zugeteilten Passagieren (ZZAZR) kleiner als die tolerierbare Fahrtzeit (TZZ) zum Ziel ist.

9. Verfahren nach Anspruch 7 oder 8, **dadurch gekennzeichnet, dass** bei energieoptimierender Zuteilung eines Zielrufs (41) dieser Zielrufeingabe der Aufzug (11, 12, 13), der die längste gemeinsame Fahrtstrecke mit geeigneter Aufzugslast (LGFSGL) aufweist, zugeteilt wird, wobei bei einer Eignung von mehreren Aufzügen (11, 12, 13) mit denselben gemeinsamen Fahrtstrecken (LGFSGL) der kostengünstigste Aufzug (11, 12, 13) zugeteilt wird.

10. Verfahren nach einem der Ansprüche 1 bis 9, **dadurch gekennzeichnet, dass** bei energieoptimierender Zuteilung neuer Zielrufeingaben eine vorhandene Begrenzung der Anzahl von Zwischenstopps ausgeschaltet wird.

11. Aufzugsanlage mit mehreren Aufzügen (11, 12, 13), die in einem Gebäude zur Personenbeförderung angeordnet sind, bei der Zielrufe von Passagieren über Zielrufeingabegeräte (14) eingebbar sind und bei der wenigstens ein Verkehrskriterium (32, 33, 34) innerhalb einer vorgebbaren Zeitspanne von einer Aufzugssteuerung (16) messbar ist, wobei einem Passagier ein Aufzug (11, 12, 13) von der Aufzugssteuerung (16) kostenoptimierend zuteilbar und über eine Informationseinheit (15) anzeigbar ist, **dadurch gekennzeichnet, dass** die Aufzüge (11, 12, 13) in Abhängigkeit von dem wenigstens einen Verkehrskriterium (32, 33, 34) den Passagieren zusätzlich energieoptimierend zuteilbar sind.
